# EUROPEAN PATENT APPLICATION

(11) **EP 2 012 276 A2**
(43) Date of publication of application: **07.01.2009**
(21) Application number: 08252184.0
(22) Date of filing: 25.06.2008
(51) Int. Cl.: G07C 5/08

(54) **Eco driving monitor mentor**

(30) Priority: 27.06.2007 GB 0712425
(71) Applicant: Knight, Ian Melvyn, Prestatyn LL19 7PH (GB)
(72) Inventor: Knight, Ian Melvyn, Prestatyn LL19 7PH (GB)

(57) **Abstract**

A driving style monitor that uses a tri-axual accelerometer, and a microcontroller to determine if the motor vehicle is being driven economically, and notifies the driver by user adjustable visual and/or audible means. The EDMM system is intended to have a moderating effect on the driver's use of redundant acceleration, and as the sensitivity of a warning is adjustable the nature of the EDMM is to have a mentoring effect on the driver thus encouraging Eco-Driving.

In order to realise an accelerometer based implementation of a driving style monitor, the axis of the accelerometer must be aligned with the axis of vehicle motion to be measured, hence the unit needs to be designed to fit the target vehicle.

In the EDMM system this familiarity is established by use of a tri-axual accelerometer and a short calibration drive/motion sequence, thus the EDMM system can be installed by the general public as no specialised skill or tools are required.

## Description

### Background:

It takes considerable energy to accelerate a mass. Therefore inappropriate driving style in terms of acceleration and breaking leads to unnecessary and excessive fuel consumption that contribute to green house gas emissions, and motor vehicle wear and tear.

Purpose: The purpose of the EDMM is to encourage operators of motor vehicles to become Eco Drivers. This is achieved by operating the vehicle in as fuel efficient manner as possible while maintaining the required level of road safety and customary consideration to other road users.

For example: Accelerating into a stop situation is a waste of fuel.

Using a higher acceleration than that which is required for safety in the current driving environment (traffic level).

Accelerating to a speed higher than the speed you intend to cruise at.

### Usage:

**Monitoring:** The EDMM system is fitted in a motor vehicle to bring to the driver's attention inefficient and poor driving style by monitoring and warning the operator of disproportionate and/or gratuitous use of acceleration.

**Mentoring:** As the vehicle operator becomes use to driving in sympathy with the EDMM system (Eco Driving) the sensitivity of the device can be adjusted upwards (more sensitive) hence the device has a mentoring influence on the driver.

*In urban road tests around North Wales I have noticed a fuel saving of 10% to 20% (from approximately 500 miles to 600 miles per tank full) as I have moderated my driving style in sympathy with the audio warnings from the EDMM system. (Test vehicle was a 2004 VW Golf 1.9 lt. TDi)*

### EDDM System Realization:

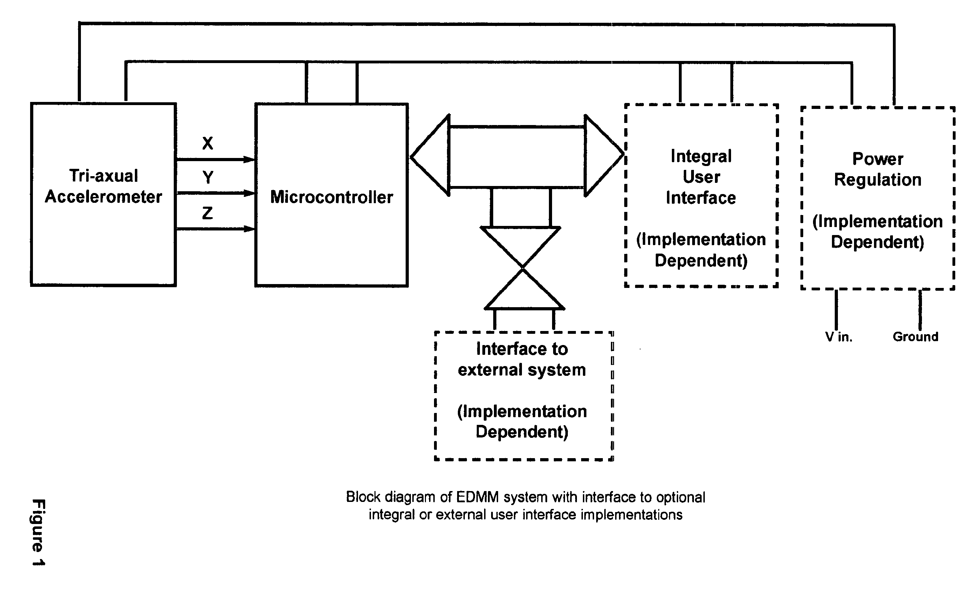

The EDMM system is based on a tri-axual accelerometer, and a microcontroller that runs a software programme that analyses motion data from the tri-axual accelerometer. Plus support electronics for system power regulation, user interface and/or circuitry to interface the system to alternative implementation configurations etc. (figure 1)

The software algorithm running in the microcontroller is in two parts:

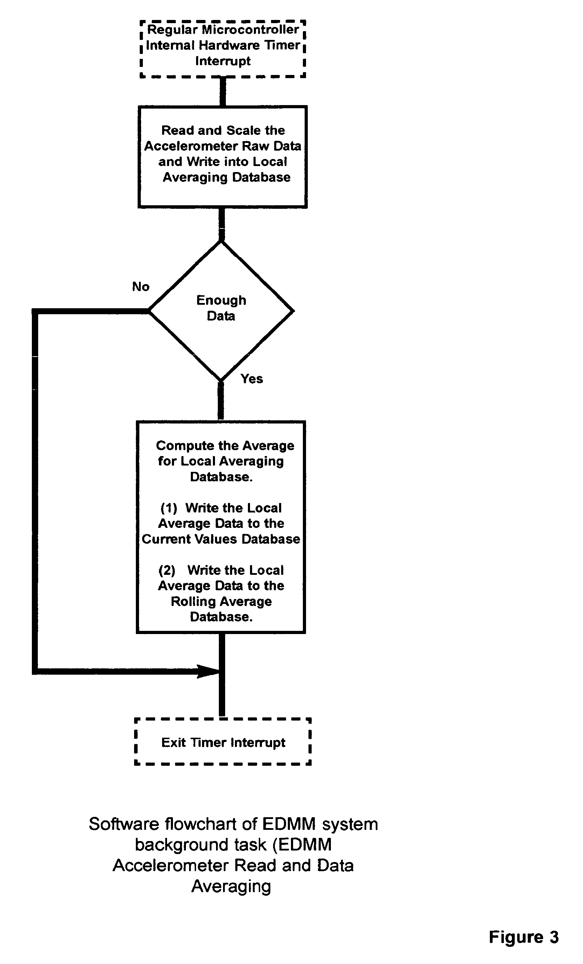

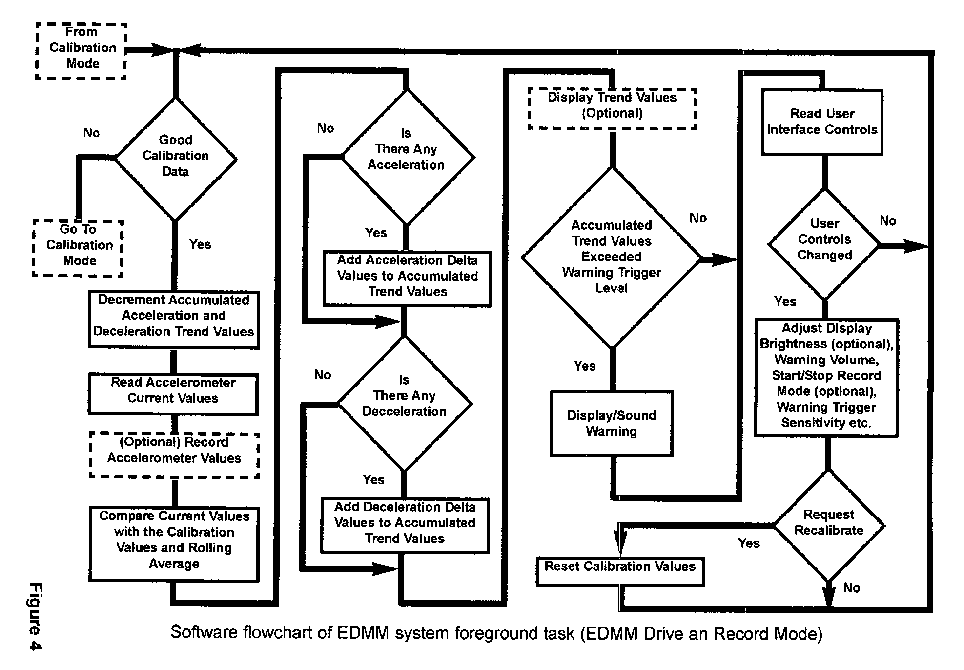

A **Background Task** that reads the x,y,z vector forces from the tri-axual accelerometer and stores them in Current Values, also a few seconds worth of Current Values are stored in a short term buffer in order to determine a Rolling Average. (figure 3)

A **Foreground Task** that has four modes:

### Idle Mode:

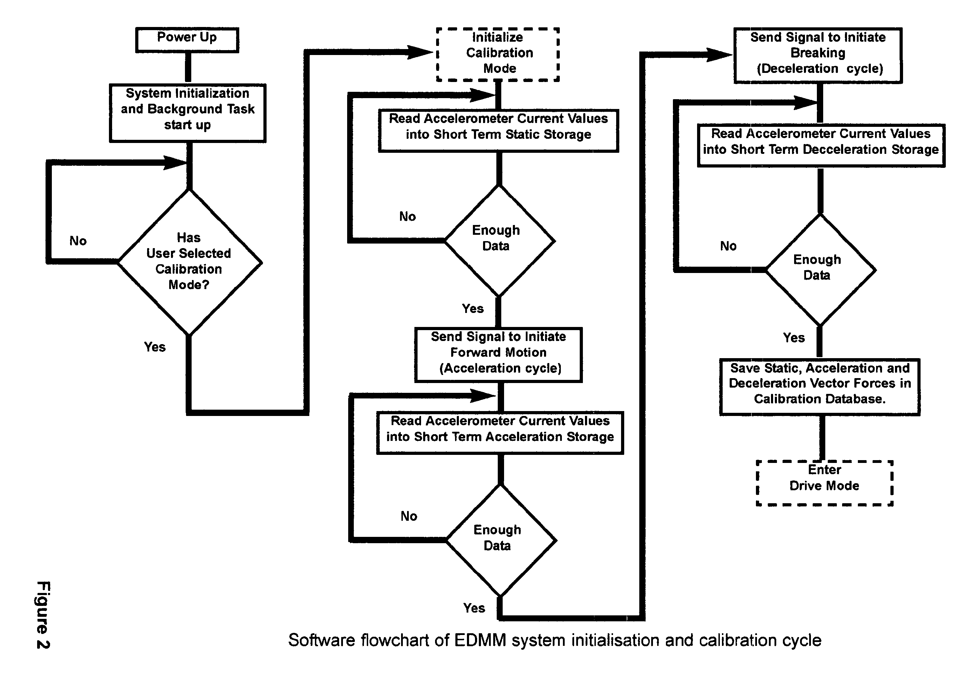

When the EDMM system is first powered up it initialises system databases etc., starts the Background Task, and goes into a wait loop for the user input to put the system into Calibration Mode. (figure 2)

### Calibration Mode:

Phase one of Calibration Mode accumulates "Current Values" for a few seconds in order to get a steady state set of x,y,z vector forces from the tri-axual accelerometer. Phase two of the Calibration Mode analyses the tri-axual accelerometer x,y,z "Current Values" vector forces that where recorded over a short vehicle acceleration and breaking cycle, about ten to fifteen meters or so depending on the rate of vehicle acceleration and deceleration. These three sets of tri-axual accelerometer x,y,z vector forces; Static, Accelerate and Decelerate are then saved in the system as the Calibration Vector Forces. (figure 2)

### EDMM Drive Mode:

In this mode the EDMM system reads the tri-axual accelerometer Current Values from the Background Task and compares these Vector Forces with the Static, Accelerate and Decelerate Calibration Vector Forces and the Rolling Average Vector Forces. In this way the EDMM system can differentiate what the Current Values tri-axual accelerometer Vector Forces are in terms of acceleration or deceleration. These Differentiated Vector Forces are then summed over a period of time and presented to the vehicle operator by visual and/or audio means. These summed Differentiated Vector Forces are also used to trigger the driver warning.

### Drive Record Mode:

In this mode the system records the tri-axual accelerometer x,y,z Current Values Vector Forces, and time stamping information. This Drive Data can be later downloaded along with the Static, Accelerate and Decelerate Calibration Vector Forces for later analysis. *This analysis could include time stamp comparisons with GPS (Global Positioning System) data*

*N.B. The EDMM Drive Mode and Drive Record Mode tasks can be run separately or concurrently depending on the user's requirements and*/*or the capabilities (available storage) of the particular EDMM system.*
(figure 4)

### Implementation:

Unlike vehicle fuel consumption meters that are an integral part of the fuel metering and management system of a motor vehicle, the EDMM system uses a tri-axual accelerometer, a microcontroller and other electronic support components such as power regulation and user interface support etc., to record and sum over time the amount of acceleration and deceleration of a motor vehicle as it is being driven.

The EDMM system can be configured to convey to the vehicle operator these accumulated forces by audio and/or visual means, and to trigger a warning when a predefined limit has been exceeded. Also depending on the implementation of the EDMM system the drive data can also be recorded and downloaded for later analysis. This analysis can then be used to identify poor driving practice, and/or better route planning.

In order to realise the above functionality the relative alignment of the tri-axual accelerometer to the motor vehicles motion must be known. In order for the system to determine acceleration/deceleration forces from lateral forces such as turning and vertical forces such as road noise and speed bumps etc., the tri-axual accelerometer alignment relative to the vehicle is registered by the motion of the vehicle during a short calibration drive.

Hence the EDMM system realises driver style monitoring and alert without the necessity of being integrated into the vehicle. Thus the EDMM system can be implemented as a completely independent device that the general public can fit for themselves. Or it can be partially or fully integrated into vehicle ancillary equipment such as entertainment systems (radio and music player etc), in vehicle navigation systems (Sat Nav) and vehicle to base station systems like taxi dispatch for example etc.

The EDMM system could even be fitted as part of the vehicle manufacturing process by integrating it into the electro/electronic systems of the vehicle, or even retrofitted to the vehicle during a vehicle service. The advantage of this type of installation is that the EDMM system does not have to be designed specifically for the vehicle it is been fitted to, as it is calibrated and aligned by the vehicle's motion, or worktable motion cycle.

### Implementation examples:

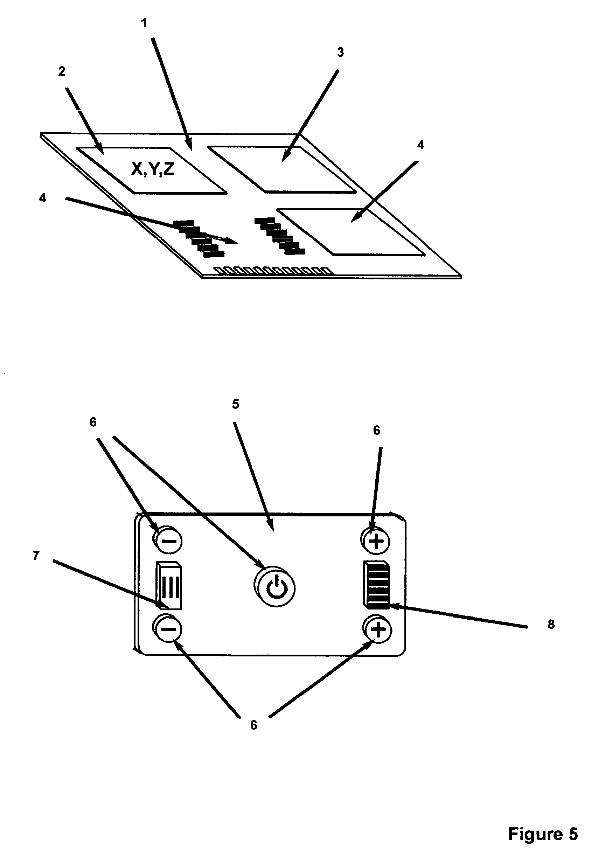

An example of a EDMM system realized on two PCB's (Printed Circuit Boards). PCB 'A' is the main PCB (1) containing the tri-axual accelerometer (2), the microcontroller (3) and support electronics (4). Where PCB 'B' (5) contains the user interface controls (6) audio annunciator (7) and optional display device (8) etc. (figure 5)

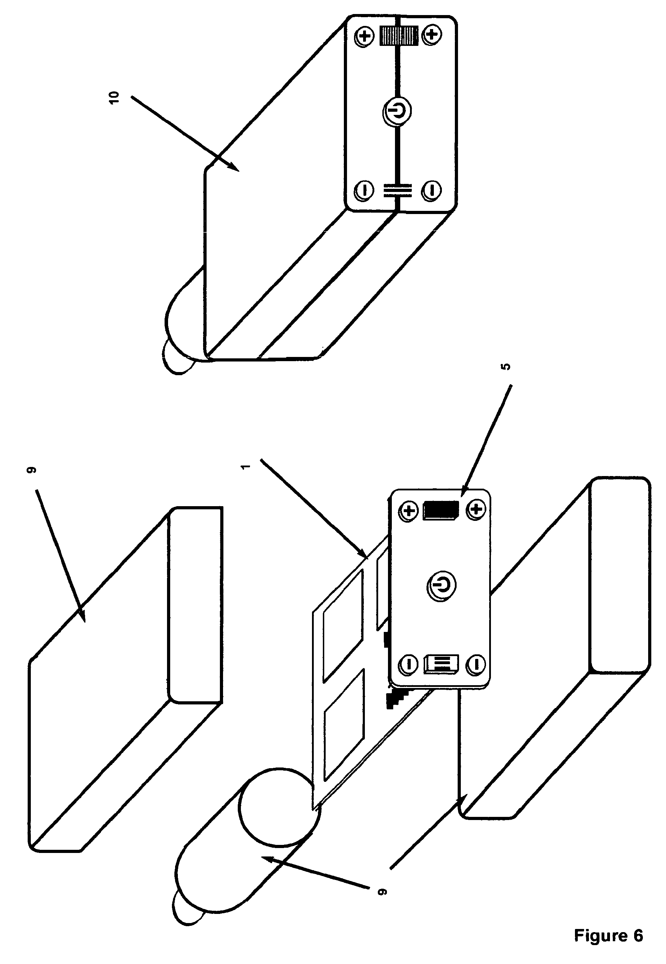

An example of a possible implementation of the EDMM system based on PCB 'A' (1) and PCB 'B' (5) that are assembled into a multi part encasement (9) that when assembled (10) can be plugged into the cigar lighter socket of a motor vehicle. (figure 6)

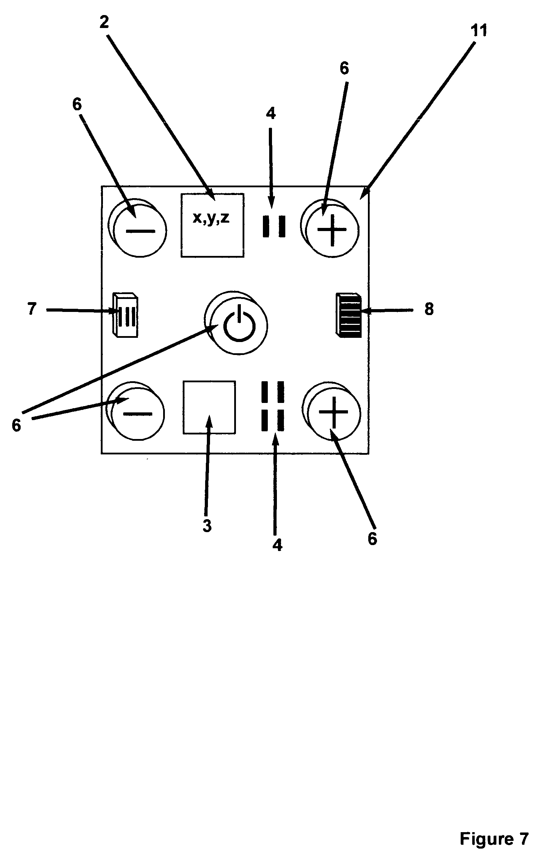

An example of a EDMM system realized on a single PCB. The PCB 'C' (11) containing the tri-axual accelerometer (2), the microcontroller (3), support electronics (4), user interface controls (6) audio annunciator (7) and optional display device (8) etc. (figure 7)

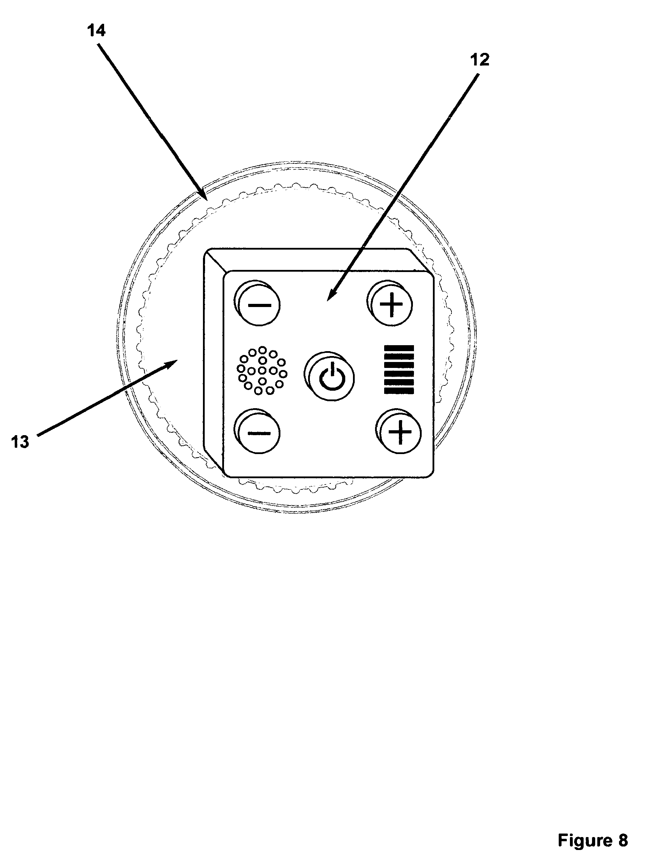

An example of a possible implementation of the EDMM system integrated into an standalone assembly (12) containing the PCB 'C' (11) that is powered by an internal battery that is charged by a solar panel (13) that is mounted inside a sucker (14) that is attached to a vehicle window. (figure 8)

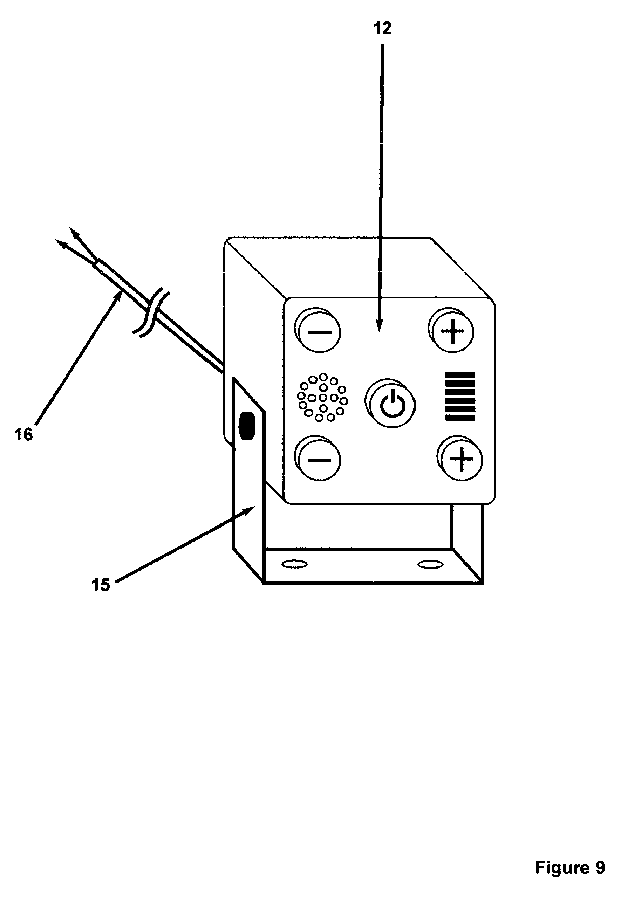

An example of a possible implementation of the EDMM system integrated into an assembly (12) containing the PCB 'C' (11) that is affixed to the vehicle by a mounting bracket (15) and is power from the vehicles electrical system by a cable (16). (figure 9)

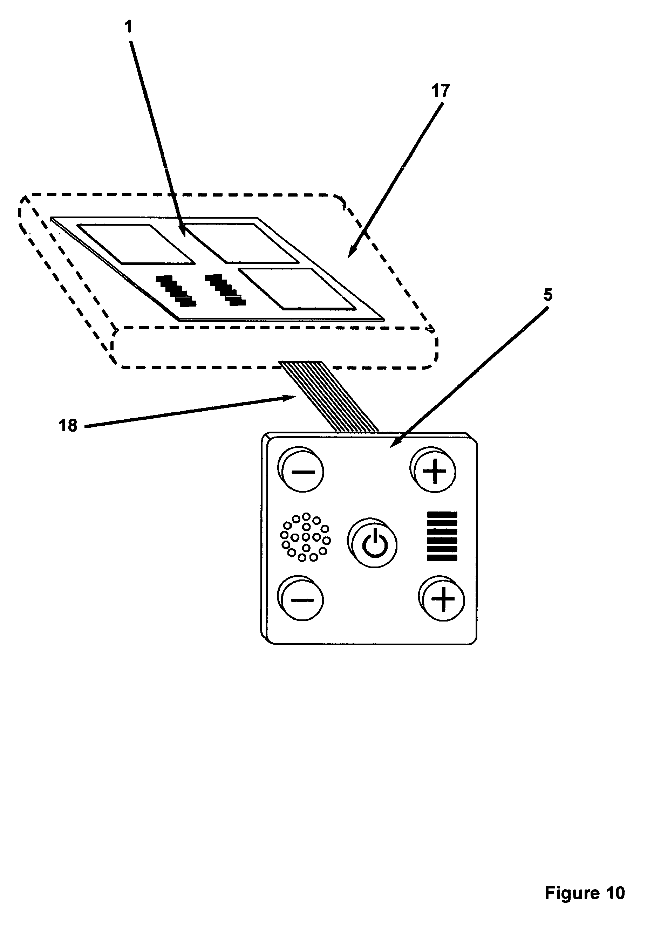

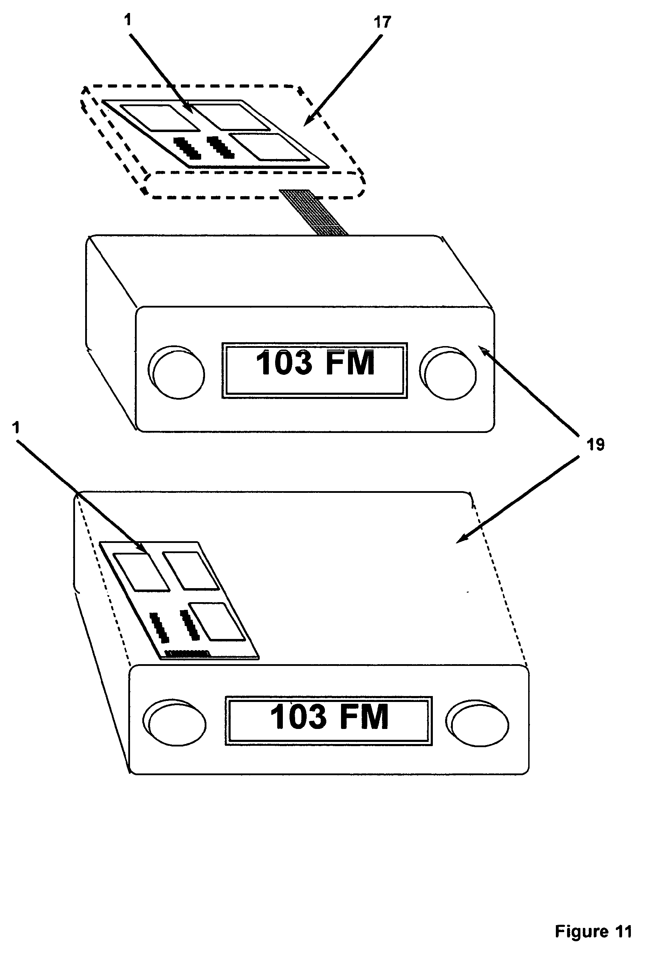

An example of a possible implementation of the EDMM system that is in two sub-assembles. Sub-assembly 'A' (1) contains the Main Components of the EDMM system and sub-assembly 'B' (5) contains the User Controls, these two units being connected to each other by a cable or fibre optics (18). Realizing the EDMM system in this way facilitates the Main Components in sub-assembly 'A' (1) to be mounted anywhere within the vehicle in an optional encasement (17), or these sub-assembly Main Components could be integrated into the electrical/electronic systems of the vehicle. While the User Controls (5) could be in their own enclosure that is affixed to the vehicle, or integrated into the vehicle's control panel (dashboard). (figure 10) An example of a possible implementation of the EDMM system that is integrated into the vehicle's entertainment system (18). Where the Main Components of the EDMM system (1) are mounted in a separate encasement (17), with the EDMM's User Controls being integrated into the entertainment system, or where the EDMM system (1) is fully integrated into the entertainment system. (figure 11)

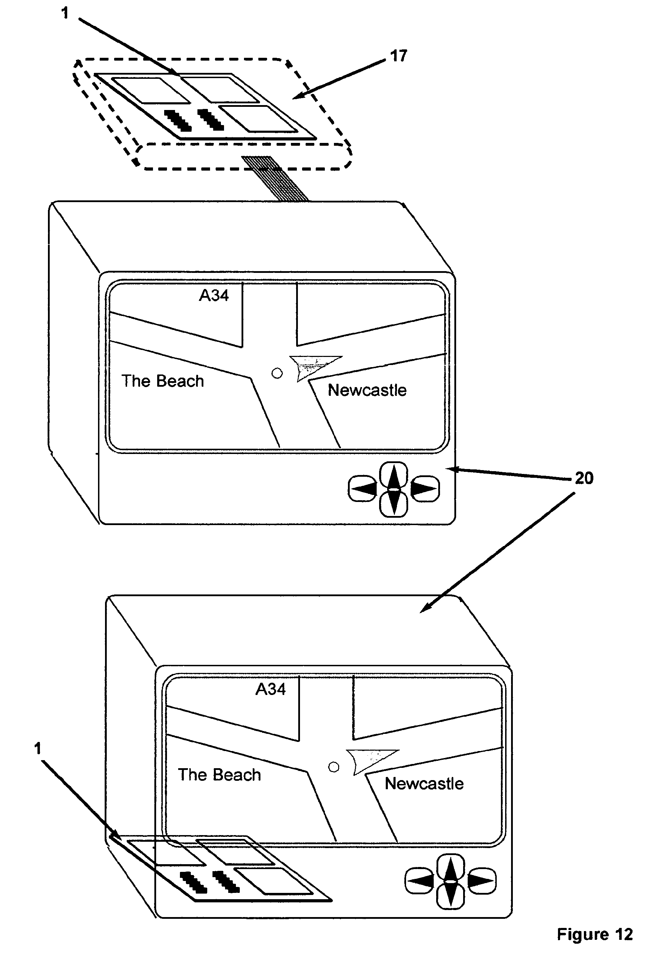

An example of a possible implementation of the EDMM system that is integrated into a vehicle's navigation system (20). Where the Main Components of the EDMM system (1) are mounted in a separate encasement (17), with the EDMM's User Controls being integrated into the navigation system, or where the EDMM system (1) is fully integrated into the navigation system (20). (figure 12)

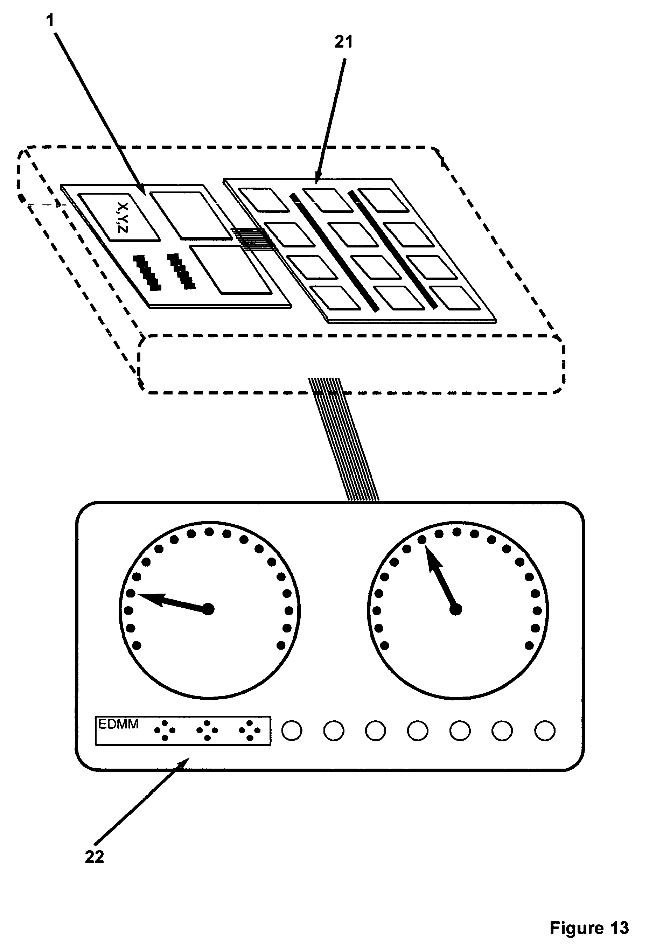

An example of a possible implementation of the EDMM system (1) where the system is partially integrated into the vehicle's own electric/electronic systems (21) with the EDMM's user controls being integrated into the vehicle's dashboard (22). (figure 13)

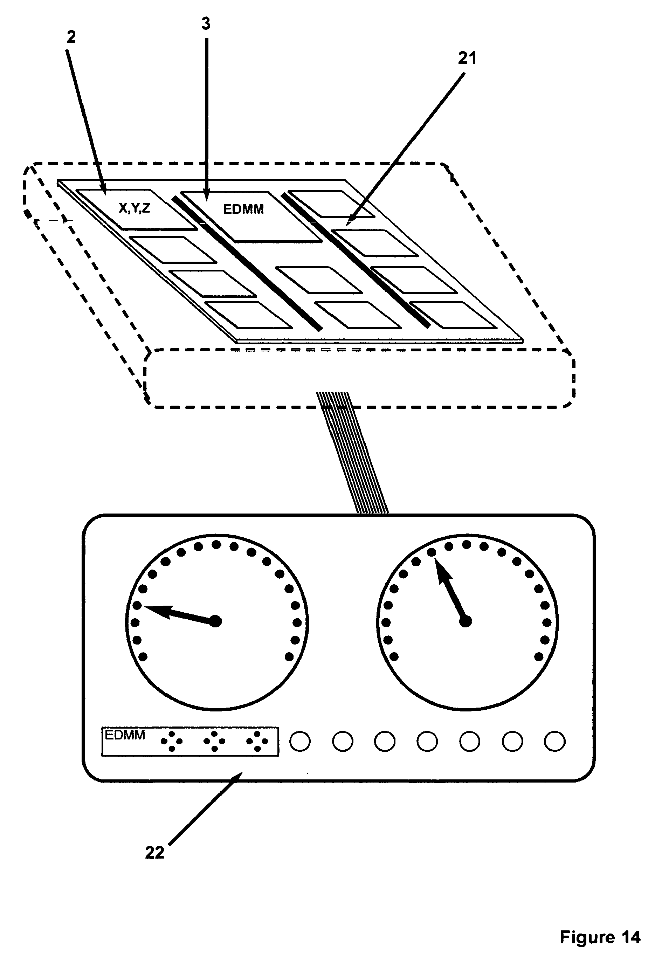

An example of a possible implementation of the EDMM system (2, 3) where it is fully integrated into the vehicle's own electric/electronic systems (21) with the EDMM's user controls being integrated into the vehicle's dashboard (22). (figure 14)

The above implementation examples are intended to demonstrate how flexible the EDMM system is and how it could connect to and/or be integrated into other vehicle electric or electronic systems.

*It is also noteworthy to say that the Main Components of the EDMM system do not have to be co-located, as the tri-axual accelerometer could be fitted into its own remote encasement and connected by cable to the rest of the EDMM system components.*

### Key feature:

The alignment of EDMM system relative to the vehicle is initialised through a calibrated cycle of vehicle motion. Hence implementations of the EDMM system do not require any specialised installation and commissioning skills, and the system can be simply installed by the general public.

The EDMM system warns the vehicle operator if they are driving in an inappropriate and in an un-ecological manner.

The sensitivity of the inappropriate driving style warning is user configurable, and can therefore be adjusted upwards (more sensitive) as the driver becomes more use to Eco-Driving.

The EDMM system is implementation flexible, inasmuch as it can be installed as a standalone unit or it can be integrated into other electrical and electronic in vehicle systems.

The EDMM system conveys to the vehicle operator via visual and/or audio means their driving style.

The EDMM system accumulates vehicle motion over a period of time; this can be later downloaded for route planning analysis and/or to monitor for poor driving practices and style.

Key to figure items:
- 1.: Main PCB.
- 2.: Tri-axual accelerometer.
- 3.: Microcontroller.
- 4.: Support electronics.
- 5.: User interface controls PCB.
- 6.: User interface controls Volume, Sensitivity etc.
- 7.: Audio annunciator.
- 8.: Optional display device.
- 9.: A multi part encasement (example implementation)
- 10.: Encasement (9) assembled.
- 11.: EDMM system on a single PCB
- 12.: Standalone EDMM system in an encasement.
- 13.: Solar panel.
- 14.: Sucker for attachment to body panel or window.
- 15.: Mounting bracket for Standalone EDMM system.
- 16.: Power supply cable.
- 17.: Encasement for EDMM system that has peripheral user interface.
- 18.: Interface connects cable and/or fibre-optic.
- 19.: In vehicle entertainment system.
- 20.: In vehicle navigation system.
- 21.: Vehicle's own electric/electronic systems.
- 22.: Vehicle's dashboard.

## Claims

1. A motor vehicle driving style monitor that uses a tri-axual accelerometer, and a microcontroller running a software programme that uses the vector forces read from the tri-axual accelerometer to determine the motion of a motor vehicle, where knowledge of the orientation of the tri-axual accelerometers relative to the orientation of its intended installation is initialized and established by a calibration motion sequence.

2. A motor vehicle driving style monitor according to claim 1, that can be simply installed by members of the general public as the motion and orientation of the device relative to the motion and orientation of the vehicle in which it is being installed in can be calibrated during a short drive sequence.

3. A motor vehicle driving style monitor according to claim 1, that can be worktable calibrated by a short motion sequence and then later fitted to its intended target vehicle, providing that the motion and orientation integrity between the calibration sequence of the device and the motion and orientation of the intended target vehicles is maintained.

4. A motor vehicle driving style monitor according to claim 3, which can be installed in a motor vehicle at the time that the vehicle is being manufactured.

5. A motor vehicle driving style monitor according to claim 3, which can be retro-fitted to a motor vehicle as a new installation of the device.

6. A motor vehicle driving style monitor according to claim 3, which can be fitted to a motor vehicle as a faulty device replacement.

7. A motor vehicle driving style monitor according to claim 3, which can be transferred between motor vehicles as long as the calibration motion and orientation integrity is maintained, or recalibrated in accordance with claim 1 or claim 3.

8. A motor vehicle driving style monitor according to claim 1 or claim 3, that uses the motions of the motor vehicle to determine if the motor vehicle is been driven in an efficient and environmentally sympathetic manner, and conveys this information via user adjustable sensitivity to the vehicle operator by visual and/or audible means.

9. A motor vehicle driving style monitor according to claim 8, that if the adjustable sensitivity warning is used in its intended manner the operator of a motor vehicle will be encouraged to drive in a economical and environmentally sympathetic way, thus becoming an Eco-Driver.
